# DEMANDE DE BREVET EUROPEEN

(11) **EP 0 579 565 A2**
(43) Date de publication de la demande: **19.01.1994**
(21) Numéro de dépôt: 93450004.2
(22) Date de dépôt: 25.06.1993
(51) Int. Cl.: A01C 23/00, A01C 23/04

(54) **Répartiteur de liquide et son dispositif de mise en oeuvre**

(30) Priorité: 29.06.1992 FR 9208184
(71) Demandeur: Société Coopérative Agricole TERRES DU SUD, F-47320 Clairac (FR)
(72) Inventeur: Plantie, Michel, F-47400 Gontaud-De-Nogaret (FR)
(74) Mandataire: Thébault, Jean-Louis

(57) **Abrégé**

- L'objet de l'invention est un répartiteur de liquides caractérisé en ce qu'il est constitué d'une chambre de distribution (17,18), d'un orifice (20) d'introduction de liquide à répartir, relié par une canalisation à une source d'alimentation sous pression dudit liquide, de moyens (22) disposés dans la chambre de distribution en regard dudit orifice d'introduction pour répartir le liquide de manière régulière en direction d'une pluralité d'orifices (25) d'évacuation du liquide, et d'une pluralité de canalisations souples (27) de distribution par gravité, reliées chacune à l'un desdits orifices d'évacuation.
- Application à la distribution notamment de produits chargés, malodorants et/ou porteurs de germes.

## Description

La présente invention concerne la distribution de liquides directement sur le sol et notamment de liquides chargés, malodorants et/ou infestés de germes de toutes sorte tels qu'en particulier des lisiers ou des boues de station d'épuration.

Les lisiers notamment sont très souvent utilisés comme produit d'amendement du sol et, à cet effet, sont projetés dans l'air pour en assurer la dispersion sur le sol, à l'aide de tonneaux et canons à lisier.

Si cette pratique a l'avantage d'épandre sur des bandes de sol de largeur plus ou moins importantes, elle présente cependant des inconvénients majeurs résultant du brassage dans l'air ambiant qui devient pestilentiel et, surtout, des germes qui peuvent être transportés par le vent sur des distances parfois très importantes.

Le but de l'invention est précisément de pallier ces inconvénients en proposant des moyens propres à répartir directement et efficacement sur le sol de tels liquides en réduisant presque totalement les risques de propagation des odeurs et des germes.

A cet effet, l'invention a pour objet un répartiteur de liquides, caractérisé en ce qu'il est constitué d'une chambre de distribution, d'un orifice d'introduction de liquide à répartir, relié par une canalisation à une source d'alimentation sous pression dudit liquide, de moyens disposés dans la chambre de distribution en regard dudit orifice d'introduction pour répartir le liquide de manière régulière en direction d'une pluralité d'orifices d'évacuation du liquide, et d'une pluralité de canalisations souples de distribution par gravité, reliées chacune à l'un desdits orifices d'évacuation.

L'invention a également pour objet un dispositif de mise en oeuvre d'un tel répartiteur, caractérisé en ce qu'il comprend :
- un bâti mobile monté sur roues ;
- au moins un répartiteur constitué desdits chambre de distribution, orifice d'introduction de liquide, moyens de répartition du liquide en direction d'une pluralité d'orifices d'évacuation et desdites canalisations, les extrémités de ces dernières étant disposées au contact ou à proximité immédiate du sol,
- une structure rapportée sur le bâti, de support et d'agencement approprié desdits répartiteur et faisceau de canalisations de distribution,
- et des moyens pour déplacer ledit bâti sur le sol en sorte de couvrir la surface désirée.

Suivant un mode de réalisation du répartiteur de liquide, ladite chambre de distribution est de forme générale cylindrique, d'axe vertical, ledit orifice d'introduction du liquide est disposé en partie inférieure de la chambre, le jet de liquide étant un jet ascendant, les moyens de répartition du liquide sont constitués par une auge de forme appropriée, agencée en regard dudit orifice d'introduction et montée libre en rotation autour d'un axe coaxial à l'axe de l'orifice d'introduction et lesdits orifices d'évacuation sont répartis autour de l'orifice d'introduction en contre-bas de celui-ci.

Avantageusement, la structure de support du ou des répartiteurs et faisceaux de canalisations de distribution est constituée par une structure déployable latéralement au bâti, d'un côté et/ou de l'autre de ce dernier, lesdites canalisations constituant des pendillards régulièrement répartis le long de chaque structure déployable.

Suivant un mode de réalisation particulièrement pratique, chaque structure déployable est constituée d'une structure à parallélogrammes articulés bout à bout et disposés dans un plan sensiblement horizontal, les pendillards étant fixés le long de côtés desdits parallélogrammes.

D'autres caractéristiques et avantages ressortiront de la description qui va suivre d'un mode de réalisation préféré du dispositif de l'invention, description donnée à titre d'exemple uniquement et en regard des dessins annexés sur lesquels :
- Figure 1 est une vue en perspective schématique d'un dispositif de répartition conforme à l'invention équipé de rampes déployables ;
- Figure 2 est une vue en coupe verticale axiale d'un répartiteur de liquide selon l'invention, et
- Figure 3 est une vue de dessus de la partie inférieure interne de la chambre de distribution du répartiteur de la figure 2.

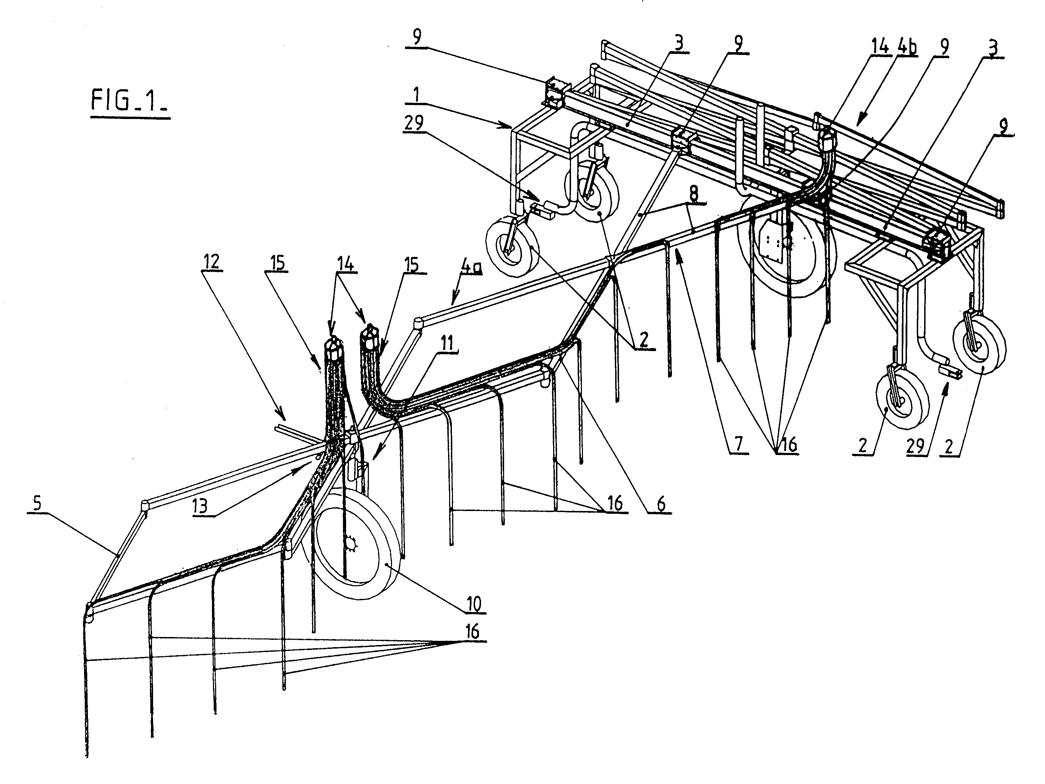

Sur la figure 1, on a représenté en 1 un bâti monté sur roues orientables 2 et portant en son milieu et suivant l'axe longitudinal du bâti, une poutre porteuse horizontale 3 sur laquelle sont montées, de part et d'autre, deux rampes déployables 4a, 4b constituées par plusieurs parallélogrammes articulés bout à bout s'étendant dans un plan approximativement horizontal.

Chaque structure 4a,4b est définie par des barres en X articulées et comprend un losange extérieur 5, un losange central 6 et un demi-losange 7 dont les côtés 8 sont articulés sur des chapes 9 mobiles le long de la poutre 3.

Les chapes coulissent par l'intermédiaire de galets et peuvent être bloquées le long de la poutre 3 dans la position désirée, par des moyens appropriés non représentés.

Chaque rampe déployable 4a, 4b est munie d'un moyen d'appui et/ou guidage au sol constitué par exemple d'une roue orientable 10 portée par une jambe 11.

Un bras 12 solidaire de la jambe 11 permet la manoeuvre de la roue 10 pour le déploiement et le repliement de la rampe 4a ou 4b.

Des moyens sont prévus pour bloquer la roue 10, pour la maintenir parallèle aux roues 2, une fois la rampe déployée sur la largeur désirée. A cet effet, on peut prévoir, par exemple, une barrette 13 articulée à une extrémité sur le bras 12 et munie d'une série de trous dans l'un desquels peut être engagée une goupille de verrouillage pénétrant dans un trou ménagé dans l'un des côtés du losange 5.

Dans le mode de réalisation illustré en figure 1, la rampe 4a est déployée et porte trois répartiteurs de liquide 14, chacun avec son faisceau 15 de canalisations de distribution agencées en sorte de constituer des pendillards 16 répartis, par exemple à intervalles de 0,80 m le long d'un des côtés de la rampe 4a.

La rampe 4b est représentée en position repliée sur le bâti 1 et n'est pas équipée des répartiteurs 14.

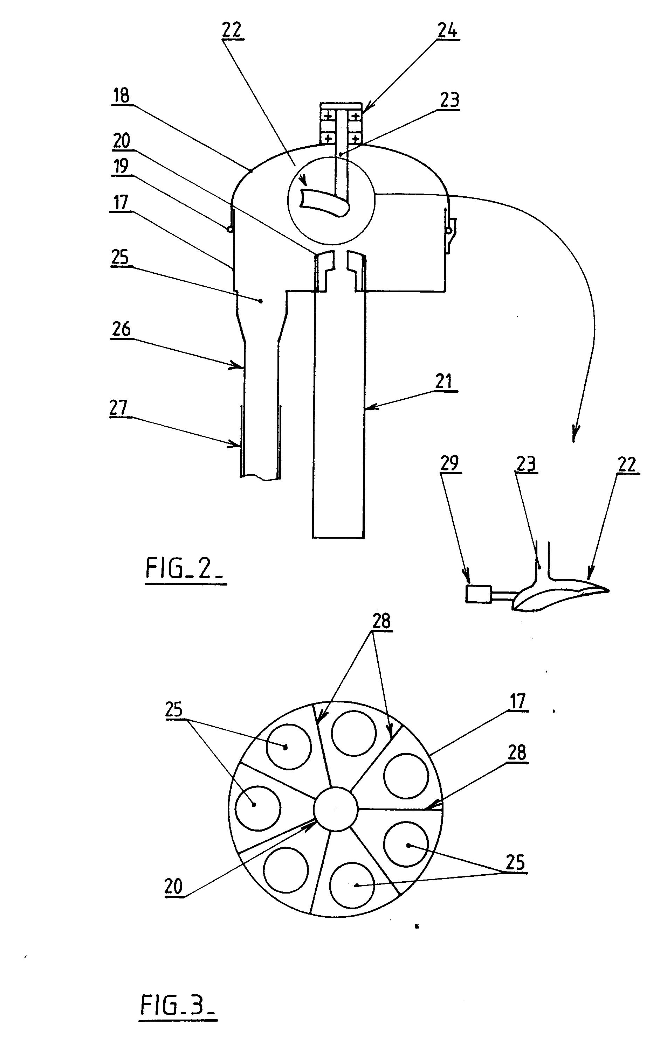

Les figures 2 et 3 illustrent un mode de réalisation d'un répartiteur 14.

Un tel répartiteur est constitué d'une chambre de distribution de forme générale cylindrique comprenant un corps principal 17 et un couvercle 18 pouvant être fermé hermétiquement et monté sur charnière 19.

Dans le fond de la chambre (17,18) et en son milieu est disposé un orifice d'introduction du liquide sous pression à répartir, ledit orifice étant défini par une buse calibrée 20, amovible, vissée à l'extrémité d'un conduit vertical 21 d'amenée de liquide provenant d'une source d'alimentation sous pression, non représentée.

Au dessus et en regard de la buse 20 est disposé un moyen de répartition régulière du liquide dans la chambre constitué par une auge 22 de forme appropriée, par exemple de forme hélicoïdale, montée libre en rotation autour d'un axe coaxial au conduit 21. A cet effet, l'auge 22 est fixée à l'extrémité d'un axe 23 monté rotatif dans un boîtier à roulement 24 fixé au couvercle 18.

Dans le fond de la chambre (17), en contre-bas de la buse 20, sont régulièrement répartis (figure 3) des orifices 25 d'évacuation du liquide. Les orifices 25 communiquent par des embouts de raccordement 26 avec des canalisations souples 27 formant le faisceau 15 (figure 1). Eventuellement, des plaques séparatrices verticales 28 (figure 3) sont interposées entre les orifices 25.

Le conduit 21 des répartiteurs 14 est relié par une canalisation appropriée (non représentée) à ladite source d'alimentation sous pression (non représentée) de liquide à distribuer, par exemple du lisier ou des boues liquides de station d'épuration.

Ce liquide peut être stocké dans un réservoir monté sur le bâti 1 ou porté par un engin annexe suivant le bâti 1 dans son déplacement, ce bâti étant par exemple tracté, grâce à l'une des pattes d'attelage 29 prévues aux extrémités du bâti 1. Le liquide est mis en pression par une pompe ou un groupe motopompe approprié (non représenté).

Les canalisations souples 27 des faisceaux 15 sont disposées et fixées le long de côtés des losanges 5,6,7 de chaque rampe déployable 4a,4b, en sorte que les pendillards 16 demeurent, au cours du déplacement des rampes au-dessus du sol, en permanence au contact ou à proximité immédiate du sol.

Le liquide (du lisier par exemple) est envoyé dans les chambres de distribution (17,18) des répartiteurs 14 à une pression de l'ordre de 5 à 10 bars.

Le jet sous pression dirigé par la buse 20 sur l'auge 22 se disperse en se répartissant sur toute la paroi interne de la chambre de distribution, et de manière régulière du fait de l'entraînement en rotation de l'auge 22 par la pression du liquide.

A partir de la chambre de distribution, le lisier s'écoule par gravité et de manière équilibrée dans les diverses canalisations 27 et s'échappe des pendillards 16 sans pression et donc sans projection au contact avec le sol.

Par suite, pratiquement aucune odeur ne se répand sur les lieux de distribution et aucune dispersion par le vent de germes n'est à craindre.

L'apport de lisier peut ainsi se faire par exemple sur des cultures jusqu'à un stade avancé de la végétation, l'apport s'effectuant dans l'interligne de culture.

La buse calibrée 20 peut être changée en fonction de la nature du liquide à distribuer ou des débits souhaités.

Il est à noter que le bâti 1 peut être déplacé en ligne par une traction exercée par la canalisation d'amenée du liquide à distribuer, à la manière d'une rampe d'irrigation déplacée par la canalisation d'alimentation en eau.

L'auge de répartition 22 comporte une partie centrale dans l'axe du jet de liquide dirigé par la buse 20, se prolongeant latéralement en direction de la paroi de la chambre de distribution (17,18) de manière hélicoïdale pour diriger le jet vers ladite paroi. L'auge 22 n'est donc pas symétrique par rapport à son axe de rotation 23, aussi, afin de supprimer d'éventuelles vibrations de l'auge lors de sa rotation sous l'effet du jet de liquide sous pression, l'auge peut être munie d'un contre-poids d'équilibrage, comme représenté schématiquement en 29 sur la figure 2.

Enfin, l'invention n'est évidemment pas limitée aux modes de réalisation représentés et décrits ci-dessus mais en couvre au contraire toutes les variantes, notamment en ce qui concerne la nature et l'agencement des moyens de répartition régulière du jet de liquide dans la chambre de distribution, en direction des divers orifices d'évacuation en parallèle, l'agencement de ces orifices, et les moyens de support des répartiteurs 14 et des pendillards 16, la ou les rampes déployables 4a,4b pouvant être remplacées par tout autre support ou rampe, déployable ou non.

## Revendications

1. Répartiteur de liquides comprenant une chambre de distribution (17,18), un orifice (20) d'introduction de liquide à répartir, relié par une canalisation à une source d'alimentation dudit liquide, des moyens (22) disposés dans la chambre de distribution pour répartir le liquide en direction d'une pluralité d'orifices (25) d'évacuation du liquide, et une pluralité de canalisations souples (15) de distribution par gravité, reliées chacune à l'un desdits orifices d'évacuation, caractérisé en ce que ledit orifice (20) d'introduction du liquide est disposé en partie inférieure de la chambre, le jet de liquide étant un jet ascendant sous pression, et en ce que lesdits moyens de répartition du liquide sont constitués par une auge de forme appropriée (22) agencée en regard dudit orifice d'introduction et montée libre en rotation autour d'un axe coaxial à l'axe de l'orifice d'introduction (20), lesdits orifices d'évacuation (25) étant répartis autour de l'orifice d'introduction (20), en contrebas de celui-ci.

2. Répartiteur suivant la revendication 1, caractérisé en ce que l'auge (22) comprend une partie centrale prolongée latéralement par une partie de forme hélicoïdale et est éventuellement munie d'un contre-poids (29) de suppression de vibrations.

3. Dispositif pour la mise en oeuvre du répartiteur selon la revendication 1 ou 2, caractérisé en ce qu'il comprend :
- un bâti mobile (1) monté sur roues (2) ;
- au moins un répartiteur (14) constitué desdits chambre de distribution (17,18), orifice (20) d'introduction de liquide, moyens (22) de répartition du liquide en direction d'une pluralité d'orifices (25) d'évacuation et desdites canalisations (15), les extrémités de ces dernières étant disposées au contact ou à proximité immédiate du sol,
- une structure (4a,4b) rapportée sur le bâti (1), de support et d'agencement approprié desdits répartiteur (14) et faisceau de canalisations de distribution (15),
- et des moyens pour déplacer ledit bâti (1) sur le sol en sorte de couvrir la surface désirée.

4. Dispositif suivant la revendication 3, caractérisé en ce que les canalisations de distribution (15) sont agencées sur la structure support (4a,4b) en sorte de constituer des pendillards (16) régulièrement répartis le long de ladite structure.

5. Dispositif suivant la revendication 3 ou 4, caractérisé en ce que ladite structure support de répartiteur (14) et de canalisations de distribution (15) est constitué par une structure (4a,4b) déployable latéralement au bâti (1), d'un côté et/ou de l'autre de ce dernier.

6. Dispositif suivant la revendication 5, caractérisé en ce que chaque structure déployable (4a,4b) est constituée d'une structure à parallélogrammes articulés bout à bout (5,6,7) et disposés dans un plan sensiblement horizontal, les pendillards (16) étant fixés le long de côtés desdits parallélogrammes.

7. Dispositif suivant la revendication 6, caractérisé en ce que chaque structure déployable (4a,4b) est munie d'un dispositif d'appui et/ou de guidage au sol (10,11).

8. Dispositif suivant la revendication 7, caractérisé en ce que ledit dispositif d'appui au sol est une roue orientable (10).

9. Dispositif suivant l'une des revendications 3 à 8, caractérisé en ce que les moyens de déplacement dudit bâti (1) sont des moyens de déplacement autonome montés sur le bâti, la source d'alimentation en liquide sous pression à répartir étant agencée sur le bâti.

10. Dispositif suivant l'une des revendications 3 à 8, caractérisé en ce que les moyens de déplacement dudit bâti (1) sont constitués par la canalisation d'alimentation en liquide sous pression à répartir, enroulée sur un tambour rotatif.
